# EUROPÄISCHE PATENTSCHRIFT

(11) **EP 2 657 154 B1**
(45) Veröffentlichungstag und Bekanntmachung des Hinweises auf die Patenterteilung: **18.11.2015**
(21) Anmeldenummer: 13151805.2
(22) Anmeldetag: 18.01.2013
(51) Int. Cl.: B65G 1/04, B65G 1/06

(54) **System und Verfahren mechanische Absturzsicherung für autonome Shuttle**
System and method mechanical fall prevention guard for autonomous shuttle
Système et procédé de protection mécanique contre la chute pour navette autonome

(30) Priorität: 23.04.2012 DE 102012206632
(43) Veröffentlichungstag der Anmeldung: 30.10.2013
(73) Patentinhaber: Krones AG, 93073 Neutraubling (DE)
(72) Erfinder: Schüsslburner, Helmut, 93073 Neutraubling (DE); Holzner, Robert, 93073 Neutraubling (DE)
(74) Vertreter: Grünecker Patent- und Rechtsanwälte PartG mbB

(56) Entgegenhaltungen:
- AU-B2- 449 383
- DE-A1- 10 021 694
- DE-C1- 3 943 428
- JP-A- H09 169 405
- US-A1- 2010 316 468

## Beschreibung

Die Erfindung betrifft ein Kanallagersystem mit ein oder mehreren Kanälen gemäß dem Oberbegriff des Patentanspruchs 1 und ein Verfahren gemäß Patentanspruch 11.

Lagersysteme dienen dem Lagern von Ladeeinheiten, die beispielsweise hintereinander auf Paletten oder mit Gitterboxen oder Behältern bereitgestellt werden. Insbesondere sind in der Materialflusstechnik Kanallagersysteme bekannt, die vorteilhaft für große Produktchargen Verwendung finden. Ständer und Auflagen in Palettenregalen werden hierbei zu Kanälen angeordnet. Im Rahmen der automatisierten Regalbedientechnik setzt ein Umsetzgerät, insbesondere ein Regalbediengerät, ein Shuttle oder einen Satelliten in einem Lagerkanal eines Palettenregals ab, so dass das Shuttle oder der Satellit Paletten, Behältern, Kisten o.ä. einlagern oder abholen kann. Ein Shuttle kann kabellos über Schleifleitungen, die in den Lagerkanälen des Kanallagers vorgesehen sind, mittels berührungsloser Energieübertragung oder durch Batterien, Akkus oder Kondensatoren mit Energie versorgt werden. In einem Kanallager lässt sich mithilfe der Umsetzgeräte eine große Anzahl an vorzugsweise gleichartigen Paletten o.ä. beispielsweise nach dem First-In-First-Out-Prinzip oder First-In-Last-Out-Prinzip in Lagerkanälen handhaben.

Ein oder mehrere Shuttle werden zum Transport insbesondere von Paletten in dem Kanallagersystem eingesetzt, typischerweise aber nur ein Shuttle pro Kanal. Die Systeme weisen häufig mehrfachtiefe Lagerkanäle auf. Der Shuttle kann in die Lagerkanäle ein- oder ausfahren und fährt dabei auf Kanalschienen oder wird durch Kanalschienen geführt. Der Shuttle kann beispielsweise mit Elektromotoren angetrieben werden.

AU 449 383 B2 offenbart ein automatisches Lagersystem für Artikel wie Paletten, Container, Luftfracht und Automobilen, mit einer Vielzahl von Reihen und Ebenen, mit Shuttle, die auf Schienen fahrend Artikel in eine Lagerposition verbringen können und aus einer Lagerposition herausladen können.

DE 100 21 694 A1 offenbart ein Verfahren zum Ein- und Auslagern von Lasten in einem Regallager, bei dem eine Last zumindest zeitweilig horizontal in eine Regalgasse transportiert und in einem Regal eingelagert wird. Ferner offenbart DE 100 21 694 A1 eine Transportvorrichtung zum Einsatz in einem Regallager zum Transport und zum Ein- und Ausladen von Lasten.

In manuell bedienten Lagern werden Shuttle mit Lastaufnahmemitteln, etwa Gabelstaplern in die Kanäle hineingehoben und wieder abgeholt. Innerhalb der Kanäle kann der Shuttle weitestgehend autonom arbeiten und den gewünschten Transportauftrag erfüllen. Dabei ist ein autonom arbeitendes Shuttle ein Shuttle, das innerhalb des Kanals im Wesentlichen unabhängig vom oder von der Anwesenheit des Lastaufnahmemittels arbeitet. Somit muss das Lastaufnahmemittel nicht vor dem Kanal stehen bleiben. Für diese Fälle sind die Enden der Kanalschienen jeweils in Fahrtrichtung geschlossen ausgeführt. Der Shuttle kann somit nicht aus dem Kanal fallen. Ein Absturz des Shuttles wird somit verhindert.

In automatisch bedienbaren Lagern werden Regalbediengeräte eingesetzt. Diese setzen ein Shuttle beispielsweise in einen Kanal ein oder holen den Shuttle dort ab. Dabei sind die Kanalschienen an den Enden offen ausgeführt. Ein Absturz des Shuttles ist solange nicht möglich, wie das Lastaufnahmemittel, hier das Regalbediengerät vor dem Lagerkanal positioniert ist. Fährt das Regalbediengerät weg, um zwischenzeitlich einen anderen Auftrag auszuführen, bleibt der autonom arbeitende Shuttle zurück, um beispielsweise in dem Kanal Transportgut umzulagern. Ein Absturz des Shuttles kann zwar steuerungstechnisch abgesichert werden, jedoch nicht verhindert werden. In automatischen Lagern sind in der Regel die Kanäle aus Gründen vereinfachter mechanischer Ausführung und Montage auf beiden Seiten offen ausgeführt und ein Shuttle könnte so auch unterhalb möglicher Paletten durchfahren und in die benachbarte Lagergasse fallen. Diese Gefahr existiert selbst dann, wenn das Regalbediengerät vor dem einen Ende, also dem Einfahrtsende des Kanals stehen bleibt.

Grundsätzlich sollte die Fahrt von einem oder mehreren Shuttles in allen Lagerkanälen und zwischen Lagerkanälen und richtig positionierten Regalbediengeräten so barrierefrei wie möglich gestaltet sein. Häufig sind auch die Aufnahme von Transportgut und die Abgabe in eine benachbarte Lagergasse gewünscht. Die Shuttles können eine eigene Sicherheitssteuerung besitzen, welche dafür sorgen kann, dass die Shuttle nicht in die Regalgassen stürzen. Versagen nun aber die mechanischen oder steuernden Komponenten am Shuttle, kann ein Absturz des Shuttles nicht verhindert werden. Obgleich Lagersysteme einen zutrittsbeschränkten Bereich definieren, kann sich auch Instandhaltungspersonal in diesem Bereich aufhalten, so dass eine Gefahr durch herabstürzende Teile entsteht.

Um Restrisiko zu minimieren, können Absturzstellen mit Klinken gesichert werden. Eine Betätigung dieser Klinken durch ein Regalbediengerät wäre zwar möglich, nimmt aber zuviel Zeit in Anspruch, da das Regalbediengerät erst an den Kanal andocken müsste und erst danach die Klinke öffnen könnte.

Angesichts des Stands der Technik und der oben diskutierten Probleme ist es Aufgabe der vorliegenden Erfindung, ein Kanallagersystem mit hoher Sicherheit gegen Shuttleabstürze und hoher Effizienz bereitzustellen.

Diese Aufgabe wird gemäß der vorliegenden Erfindung mit Kanallagersystem mit ein oder mehreren Kanälen gemäß des kennzeichnendenteils des Patentanspruchs 1 und ferner mit einem Verfahren gemäß des Patentanspruchs 11 gelöst.

Die Erfindung stellt ein Kanallagersystem mit ein oder mehreren Kanälen bereit, umfassend mindestens einen Shuttle zum Transport von Paletten; geschlossene Sperrmittel am Kanalende, die mechanisch geöffnet werden können, die im geschlossenen Zustand das Ausfahren des Shuttles aus dem Kanal verhindern; wobei der Shuttle mechanische Betätigungsmittel zum Öffnen der Sperrmittel umfasst.

An den Kanalenden der Kanäle befinden sich Sperrmittel, kurz Sperren genannt. Der Shuttle kann beim Ausfahren diese Sperren öffnen. Dadurch ergibt sich ein Zeitvorteil, da das Öffnen der Sperren durch das Lastaufnahmemittel, etwa ein Regalbediengerät, nicht abgewartet werden braucht. Beim Einfahren des Shuttles in den Kanal können die Sperren einfach überfahren werden, in diese Richtung ist die Sperre nicht wirksam. Die Sperren sind im normalen Zustand geschlossen. Ein auf das Kanalende zufahrender Shuttle fährt gegen die geschlossenen Sperren, sofern nicht eine mechanische Öffnung der Sperren getätigt wird. Diese mechanische Öffnung kann durch den Shuttle erfolgen.

Das System kann ferner eine Steuereinheit umfassen, die ausgebildet ist, mit dem Shuttle zu kommunizieren.

Hierbei kann es sich beispielsweise um eine übergeordnete Transportsteuerung handeln, die den Shuttle, mehrere Shuttles oder sogar mehrere Regalbediengeräte steuert. Durch Verwendung dieser Steuereinheit, die sich typischerweise nicht auf dem Shuttle befindet, kann der Shuttle hinsichtlich Öffnen der Sperren und/oder Weiterfahrt angewiesen werden. In dem System kann der Shuttle eine Kontrolleinheit umfassen, die ausgebildet ist, die Position des Shuttles im Kanal festzustellen, insbesondere in Bezug auf das Kanalende; und die ausgebildet ist, mit der Steuereinheit zu kommunizieren.

Die Kontrolleinheit auf dem Shuttle, kann per Funk, drahtloser Verbindung, beispielsweise WLAN, mit der Transportsteuerung kommunizieren. Die Position des Shuttles im Kanal kann zu jeder Zeit festgestellt werden. Insbesondere kann die Position des Shuttles im Hinblick auf das Kanalende festgestellt werden. Da die Position der Sperren relativ zum Kanalende bekannt ist, kann auch festgestellt werden, ob sich der Shuttle im Bereich der Sperren befindet. Dadurch kann auch ein ungewolltes Fahren gegen die Sperren verhindert werden, indem der Shuttle vorher zum Stehen gebracht wird.

In dem System können die mechanischen Betätigungsmittel durch die Kontrolleinheit auslösbar sein, so dass die Sperrmittel geöffnet werden.

Die Kontrolleinheit kann die mechanischen Betätigungsmittel auslösen, so dass die Sperrmittel, also die Sperren geöffnet werden. Dabei versteht sich, dass die Sperren nur solange geöffnet bleiben, wie eine öffnende Kraft auf sie einwirkt.

In dem System kann die Kontrolleinheit die mechanischen Betätigungsmittel auslösen, wenn sie eine Freigabe durch die Steuereinheit erhält.

Durch die Kommunikation von Kontrolleinheit auf dem Shuttle und der Steuereinheit können verschiedene Bedingungen abgeprüft werden, bevor eine Anweisung an den Shuttle zum Öffnen der Sperren ergeht. Dadurch kann eine zusätzlich Redundanz und damit eine höhere Sicherheit geschaffen werden.

In dem System kann die Steuereinheit eine zentrale Steuereinheit des Kanallagersystems umfassen.

Die Aufgaben der Steuereinheit können von einer zentralen Steuereinheit übernommen werden, etwa in einem Kontrollraum, so dass von dort alles überwacht werden kann.

In dem System kann die Steuereinheit eine Steuereinheit eines Lastaufnahmemittels, insbesondere eines Regalbediengerätes sein.

Die Steuereinheit eines Lastaufnahmemittels, insbesondere eines Regalbediengerätes kann alternativ oder zusätzlich die Steuerungsaufgaben für den Shuttle übernehmen. Dabei kann eine weitere Redundanzstufe geschaffen werden.

In dem System können die mechanischen Betätigungsmittel einen Stab oder einen Stößel umfassen.

Um die Sperrmittel, kurz Sperren, zu öffnen, können stabförmige oder stößelartige Betätigungsmittel verwendet werden. Typischerweise werden diese im Wesentlichen senkrecht zur Bewegungsrichtung des Shuttles nach unten ausgelöst. Diese Stößel können mechanisch, etwa mittels eines Federsystems oder mit einem Motor oder mit einer Steuerkurve ausgelöst werden. Dabei wird typischerweise der Stößel eine Ausgangsposition verlassen und nach unten ausgelöst. In der ausgelösten Position verbleibt der Stößel typischerweise, etwa durch Einrasten oder mechanisches oder magnetisches Festhalten, bis die Kontrolleinheit des Shuttles typischerweise eine Rückkehr des Stößel zurück in die Ausgangposition auslöst, etwa durch einen Schaltvorgang.

In dem System können Sperrmittel Schwerkraftsperren mit Schaltfahnen umfassen, die durch den Stab oder Stößel, insbesondere durch die Spitze des Stößels betätigbar sind.

Die Sperrmittel oder Sperren umfassen Schaltfahnen, die typischerweise mit dem Stößel in Kontakt kommen, so dass wenn der Stößel ausgelöst wird, die Sperre betätigt und schließlich geöffnet wird.

In dem System kann die Unterseite des Shuttles eine im Wesentlichen durchgehende Fläche umfassen und die Unterseite des Shuttles kann die Schwerkraftsperren geöffnet halten, wenn die Unterseite sich über der Sperre befindet.

Der Shuttle kann nach dem Auslösen und Öffnen der Sperren weiter fahren. Die Unterseite des Shuttles kann die Sperren geöffnet halten.

Die Erfindung stellt ferner ein Verfahren zum sicheren Betreiben eines Shuttles in einem Kanallagersystem mit ein oder mehreren Kanälen bereit, das Kanallagersystem mit geschlossenen Sperrmitteln am Kanalende, die mechanisch geöffnet werden können, die im geschlossenen Zustand das Ausfahren des Shuttles aus dem Kanal verhindern, mit einer Steuereinheit zum Kommunizieren mit dem Shuttle, das Shuttle mit mechanischen Betätigungsmitteln und mit einer Kontrolleinheit; das Verfahren mit den Schritten:
Fahren des Shuttles im Kanal, dabei Erfassen der aktuellen Position des Shuttles durch die Kontrolleinheit;
Anhalten des Shuttles in einer vordefinierten Position relativ zum Kanalende an den mechanischen Sperrmitteln; Bereitstellen eines Lastaufnahmemittels vor dem Kanalende; Öffnen der Sperrmittel durch die mechanischen Betätigungsmittel des Shuttles, wenn eine Freigabe durch die Steuereinheit erhalten wird;
Überfahren der geöffneten Sperrmittel durch den Shuttle, wenn das Lastaufnahmemittel eine vordefinierte Aufnahmeposition erreicht hat; und
Aufnehmen des Shuttles durch das Lastaufnahmemittel.

Durch die mehrfache Möglichkeit der Redundanz, zum einen durch Erhalt der Freigabe durch die Steuereinheit und des Weiteren durch Erhalt eines Weiterfahrtsignals, wenn das Lastaufnahmemittel eine vordefinierte Position erreicht hat, kann der Shuttle sicher und effizient den Transport durchführen und auf das Lastaufnahmemittel, also das Regalbediengerät auffahren.

Der Gegenstand der Erfindung wird anhand der nachfolgenden Zeichnungen beispielhaft erläutert.

Es zeigen:
Figur 1: Schematische Aufsicht auf einen Shuttle in einem Kanal eines Kanallagersystems aus der Perspektive eines Regalbediengerätes.
Figur 2: Schematische Seitenansicht eines Shuttles bei geschlossener Sperre.
Figur 3: Schematisch Seitenansicht eines Shuttles bei geöffneter Sperre.

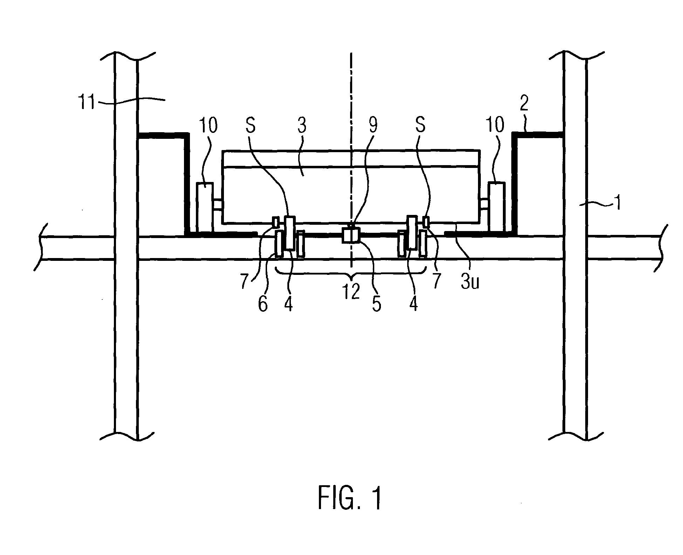

Figur 1 zeigt eine schematische Aufsicht auf einen Shuttle 3 in einem Kanal 11, wie es etwa aus der Perspektive eines Regalbediengerätes zu sehen ist. Der Shuttle 3 wird in einem Kanal 11 auf Kanalschienen 2 geführt. Die Kanalschienen 2 sind typischerweise in offener Bauweise ausgeführt, d.h. es in diesem Beispiel keine Sperren oder Klinken im Bereich des Kanalendes vorgesehen. Der Shuttle 3 fährt auf Rollen oder Rädern 10 auf den Kanalschienen 2.

Der Shuttle 3 umfasst an seiner Unterseite 3u ein Betätigungsmittel, etwa einen Stößel oder Stab 9. In Figur 1 ist dieser Stößel 9 mittig bezüglich des Shuttles 3 gezeichnet. Es ist jedoch auch denkbar, dass der Stößel 9 nicht mittig, sondern zu einer Seite des Shuttles versetzt vorgesehen ist (hier nicht gezeigt). Ebenso ist es möglich, mehr als einen Stößel vorzusehen. Typischerweise ist der Stößel im vorderen Bereich des Shuttles 3 vorgesehen, d.h. vor der Vorderkante der Unterseite 3u des Shuttles 3. Da das Shuttle 3 in beide Richtungen fahren kann und typischerweise im Wesentlich symmetrisch ausgebildet sein kann, kann ein weiterer Stößel der Art des Stößels 9 an der in dieser Figur abgewandten Seite des Shuttles 3 vorgesehen sein (hier nicht gezeigt). Dabei gelten beispielhaft die bezüglich des Stößels 9 diskutierten Eigenschaften auch für diesen weiteren Stößel.

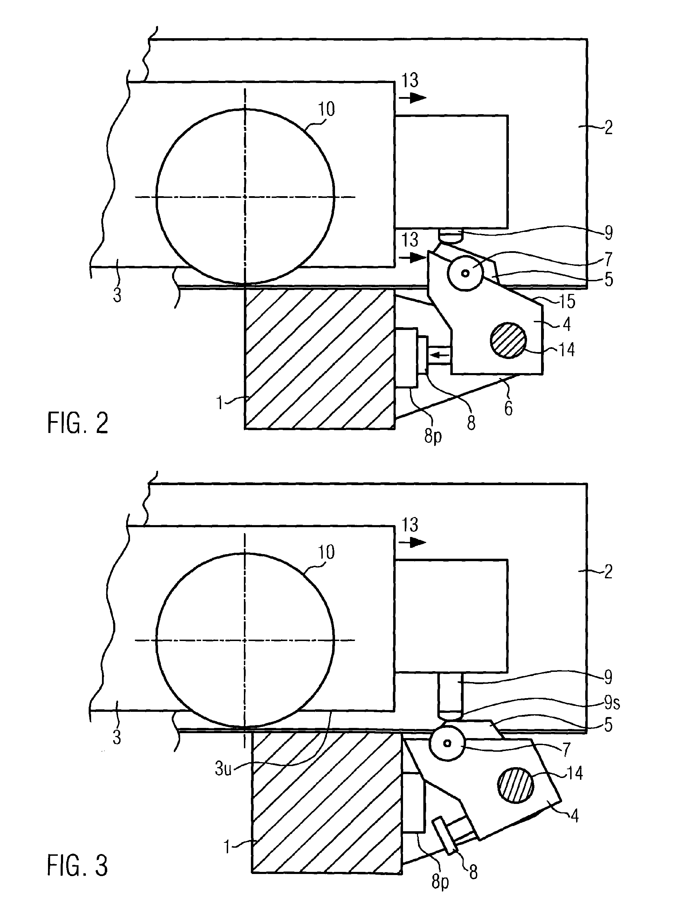

Unterhalb des Stößels 9 ist eine Schaltfahne 5 der Sperre 12 gezeigt. Die Sperre 12 umfasst Sperrhebel 4, Schaltfahne 5, Rolle 7 und Anschlagpunkt 8 (hier nicht gezeigt), der in Figuren 2 und 3 näher diskutiert wird. Die Sperre 12 ist in den Bereich S im geschlossenen Zustand gezeigt. Der geschlossene Zustand ist der Ausgangszustand. Die Sperre 12 ist vorzugsweise am Regalbau 1 angebracht, nicht an den Schienen 2. Das hat den Vorteil, dass weiterhin offene Kanalschienen 2 für Kanallagersysteme verwendet werden können. Zudem lassen sich bestehende System im Bereich der Kanalenden nachrüsten. Auch kann der Regalbau im Falle eines Defekts die Kräfte besser auffangen, die auftreten, wenn der Shuttle gegen die Sperre 12 fährt.

Die Sperre 12, wie in Figur 1 gezeigt, verhindert, dass der Shuttle 3 aus dem Kanal 11 herausfahren kann (hier aus der Figurenebene heraus). Der Shuttle 3 umfasst eine Kontrolleinheit, etwa einen Kontrollcomputer (hier nicht gezeigt). Ein Auslösen des Stößels 9 kann die Sperre 12 öffnen, wie dies anhand der Figuren 2 und 3 diskutiert wird.

Die Figur 2 zeigt eine seitliche Aufsicht auf den Shuttle 3. Die Sperre 12 ist mit einer Befestigung 6 mit dem Regalbau 1 verbunden. Die Sperre 12 besteht in diesem Beispiel aus zwei Teilen 4 und 8. Mit dem Bezugszeichen 4 ist ein Sperrhebel bezeichnet. Der Sperrhebel 4 ist gegenüber der Befestigung 6 rotierbar und eine Achse 14 ausgebildet, so dass der Sperrhebel 4 um die Achse 14 gegenüber der Befestigung 6 rotieren kann. Der bewegliche, rotierbare Sperrhebel 4 umfasst an seinem unteren Ende einen Anschlag 8. Der Anschlag 8 ist im geschlossenen Zustand der Sperre 12, wie in Figur 2 gezeigt, in Kontakt mit dem Anschlagspunkt 8p. Der Anschlag 8 besitzt typischerweise so viel Masse, dass die Sperre 12 im Normalzustand, wie in Figur 2 gezeigt, geschlossen ist. Mit anderen Worten besitzt die Sperre 12, also Sperrhebel 4 mit Anschlag 8, ein Drehmoment um die Achse 14, im Wesentlichen aufgrund des Gewichts des Anschlags 8. Der statische, geschlossene Zustand der Sperre wird durch das Anschlagen des Anschlags 8 an den Anschlagspunkt 8p erzeugt.

Es soll verstanden sein, dass die Seitenansichten der Figuren 2 und 3 nur einen Sperrhebel 4 und Anschlag 8 mit Anschlagspunkt 8p zeigen. Eine zweite Gruppe mit gleichartig aufgebautem Sperrhebel 4, Anschlag 8 und Anschlagspunkt 8p werden durch die erste Gruppe verdeckt. An der Oberseite 15 des Sperrhebels 4 ist eine Rolle 7 vorgesehen, die das Überfahren der Sperre 12 durch den Shuttle 3 erleichtert.

Räumlich hinter dem Sperrhebel 4 liegend ist eine Schaltfahne 5 skizziert. Der am Shuttle 3 vorgesehene Stab oder Stößel 9 ist in dem nicht ausgelösten Zustand nicht oder nur leicht mit der obersten Kante der Schaltfahne 5 in Kontakt. Ein Shuttle 3, das in Transportrichtung 13 auf die Sperre 12 zufahren würde, würde gegen die geschlossene Sperre 12 fahren.

In Figur 3 ist die Situation gezeigt, wenn die Sperre 12 geöffnet ist. Der Stößel 9 ist jetzt ausgelöst. Das Auslösen kann durch einen/ein Freigabe- oder Auslöseimpuls oder -signal geschehen. Dieser Impuls kann von einer Steuereinheit gesendet und von einer Kontrolleinheit am Shuttle 3 empfangen werden (beide hier nicht gezeigt). Der Stößel oder Stab 9 ist in Figur 3 nach unten ausgelöst. In Figur 3 ist das im Wesentlichen senkrecht nach unten und senkrecht zur Fahrtrichtung 13 des Shuttles 3, siehe Figur 2. Dadurch hat der ausgefahrenen Stößel 9 mindestens eine Länge erreicht, die der Unterkante 3u des Shuttles 3 entspricht. Figur 3 zeigt eine Spitze 9s des Stößels 9. Der Stößel 9 drückt mit seiner Spitze 9s mit einer Kraft auf die Schaltfahne 5, so dass der Sperrhebel der Sperre 12 nach unten gedrückt wird und die Sperre geöffnet wird. Dadurch löst sich auch der Anschlag 8 vom Anschlagspunkt 8p.

Die Länge der Schaltfahne 5 ist dabei typischerweise so gewählt, dass im Hinblick auf die Weiterfahrt des Shuttles in Transportrichtung 13 die Sperre 12 solange durch den Stößel 9 geöffnet bleibt, bis die Rollen 7 an der Oberseite des Sperrhebels 4 in Eingriff mit der Unterseite des Shuttles sind oder diese wenigstens berühren. Die Unterseite 3u des Shuttles ist im Wesentlichen durchgängig ausgebildet. Mit anderen Worten übernimmt die Unterseite das weitere Betätigen der Sperre. Es versteht sich, dass die Sperre nicht in den geschlossenen Zustand zurückkehren kann, solange die Unterseite 3u des Shuttles über der Sperre ist, d.h. solange die Rollen 7 in Eingriff oder in Kontakt mit der Unterseite des Shuttles 3 sind.

In einem Verfahren fährt ein Shuttle 3 wie in den Figuren 1 - 3 gezeigt auf ein Kanalende zu, etwa um ein Transportauftrag abzuschließen, von einem Regalbediengerät abgeholt zu werden etc. Der Shuttle 3 kann autonom arbeiten und kann insbesondere regelmäßig oder auf Abfrage durch eine Steuerung seine Position innerhalb des Kanals mitteilen. Der Shuttle hat typischerweise an Front und Hinterseite, jeweils bezogen auf die Fahrtrichtung, einen Stößel 9, wie oben beschrieben.

In der Nähe des Kanalendes bleibt der Shuttle in einer vordefinierten Position stehen. Dabei hat er typischerweise noch einen geringen Abstand zur Sperre 12, also insbesondere dem Sperrhebel 4. Diese Position kann steuerungstechnisch als "Sicherer Halt" bezeichnet werden. Der Shuttle kann typischerweise ohne weitere Informationen die Sperre 12 nicht öffnen. Erst wenn über eine Funkverbindung, WLAN mit einer übergeordneten Transportsteuerung und/oder mit einem Regalbediengerät kommuniziert wird, können typischerweise weitere Bedienungen erfolgen, insbesondere das Öffnen der Sperre. So werden typischerweise die Transportsteuerung, der Shuttle und eine Regalbediengerät sich gegenseitig ihre Anwesenheit bestätigen. Die übergeordnete Transportsteuerung kann eine Freigabe an den Shuttle übermitteln. Das kann aber unter der Bedingung geschehen, dass die Anwesenheit eines Regalbediengerätes abgewartet werden muss. Währenddessen kann das Regalbediengerät an die Position fahren, an der es den Shuttle übernehmen soll. Darunter soll eine Grobpositionierung des Regalbediengerätes verstanden sein. Ab dem Erreichen dieser Position kann der Shuttle nicht mehr abstürzen, selbst wenn das Regalbediengerät noch nicht oder noch nicht vollständig an den Kanal angedockt hat. Die Freigabe zum Öffnen der Sperre kann dem Shuttle erteilt werden. Der Shuttle öffnet die Sperre mit Hilfe des Stößels oder Stabs 9, wie bereits anhand der Figuren 1 - 3 diskutiert. Währenddessen kann eine Feinpositionierung des Regalbediengeräts vorgenommen werden. Dieser Vorgang ist zeitlich kürzer als die Zeit für die Feinpositionierung des Regalbediengerätes abzuwarten. Der Shuttle erhält jedoch erst dann den Befehl zur Weiterfahrt auf das Regalbediengerät, wenn das Regalbediengerät seine vorgesehene Position nach der Feinpositionierung erreicht hat. Bei einer Störung, insbesondere einem mechanischen Defekt fährt der Shuttle gegen die geschlossene Sperre. Beim Ausbleiben der Signale zum Öffnen der Sperre und zum Auffahren auf das Regalbediengerät bleibt der Shuttle stehen und kann entweder die Sperre nicht überwinden oder nicht auf das Regalbediengerät auffahren. In beiden Fällen ist ein Absturz des Shuttles verhindert.

Es versteht sich, dass die in den zuvor beschriebenen Ausführungsbeispielen genannten Merkmale sich nicht auf spezielle Kombinationen beschränken, sondern auch in beliebigen anderen Kombinationen möglich sein können.

## Patentansprüche

1. Kanallagersystem mit ein oder mehreren Kanälen (11) umfassend mindestens einen Shuttle (3) zum Transport von Paletten;
geschlossene Sperrmittel (12) am Kanalende, die mechanisch geöffnet werden können, die im geschlossenen Zustand das Ausfahren des Shuttles (3) aus dem Kanal (11) verhindern;
**dadurch gekennzeichnet, dass**
der Shuttle (3) mechanische Betätigungsmittel (9) zum Öffnen der Sperrmittel (12) umfasst.

2. System nach Anspruch 1 ferner eine Steuereinheit umfassend, die ausgebildet ist, mit dem Shuttle (3) zu kommunizieren.

3. System nach Anspruch 2, wobei der Shuttle (3) eine Kontrolleinheit umfasst, die ausgebildet ist, die Position des Shuttles (3) im Kanal (11) festzustellen, insbesondere in Bezug auf das Kanalende; und die ausgebildet ist, mit der Steuereinheit zu kommunizieren.

4. System nach Anspruch 3, wobei die mechanischen Betätigungsmittel (9) durch die Kontrolleinheit auslösbar sind, so dass die Sperrmittel (12) geöffnet werden.

5. System nach Anspruch 4, wobei die Kontrolleinheit die mechanischen Betätigungsmittel (9) auslöst, wenn sie eine Freigabe durch die Steuereinheit erhält.

6. System nach wenigstens einem der Ansprüche 2 - 5, wobei die Steuereinheit eine zentrale Steuereinheit des Kanallagersystems umfasst.

7. System nach wenigstens einem der Ansprüche 2 - 5, wobei die Steuereinheit eine Steuereinheit eines Lastaufnahmemittels, insbesondere eines Regalbediengerätes ist.

8. System nach wenigstens einem der Ansprüche 1 - 5, wobei die mechanischen Betätigungsmittel (9) einen Stab oder einen Stößel umfassen.

9. System nach wenigstens einem der Ansprüche 6 - 8, wobei die Sperrmittel (12) Schwerkraftsperren mit Schaltfahnen (5) umfassen, die durch den Stab oder Stößel (9), insbesondere durch die Spitze (9s) des Stößels betätigbar sind.

10. System nach Anspruch 9, wobei der Shuttle (3) eine Unterseite (3u) besitzt, wobei die Unterseite (3u) des Shuttles (3) eine im wesentlichen durchgehende Fläche umfasst, und die Unterseite (3u) des Shuttles die Schwerkraftsperren (12) geöffnet halten kann, wenn die Unterseite (3u) sich über der Schwerkraftsperre (12) befindet.

11. Verfahren zum absturzsicheren Betreiben eines Shuttles (3) in einem Kanallagersystem mit ein oder mehreren Kanälen (11), mit geschlossenen Sperrmitteln (12) am Kanalende, die mechanisch geöffnet werden können, die im geschlossenen Zustand das Ausfahren des Shuttles (3) aus dem Kanal (11) verhindern, mit einer Steuereinheit zum Kommunizieren mit dem Shuttle (3), das Shuttle (3) mit mechanischen Betätigungsmitteln (9) und mit einer Kontrolleinheit; mit den Schritten:
Fahren des Shuttles (3) im Kanal (11), dabei Erfassen der aktuellen Position des Shuttles (3) durch die Kontrolleinheit;
Anhalten des Shuttles (3) in einer vordefinierten Position relativ zum Kanalende an den mechanischen Sperrmitteln (12);
Bereitstellen eines Lastaufnahmemittels vor dem Kanalende;
Öffnen der Sperrmittel (12) durch die mechanischen Betätigungsmittel (9) des Shuttles (3), wenn eine Freigabe durch die Steuereinheit erhalten wird;
Überfahren der geöffneten Sperrmittel (12) durch den Shuttle (3), wenn das Lastaufnahmemittel eine vordefinierte Aufnahmeposition erreicht hat;
Aufnehmen des Shuttles (3) durch das Lastaufnahmemittel.

## Claims

1. Channel storage system having one or more channels (11), comprising at least one shuttle (3) for transporting pallets, and closed blocking means (12) at the end of the channel, which means can be opened mechanically and, when in the closed state, prevent the shuttle from travelling out of the channel (11), **characterised in that** the shuttle (3) comprises mechanical actuation means (9) for opening the blocking means (12).

2. System according to claim 1, further comprising a control unit which is designed to communicate with the shuttle (3).

3. System according to claim 2, wherein the shuttle (3) comprises a monitoring unit which is designed to determine the position of the shuttle (3) in the channel (11), in particular in relation to the end of the channel, and which is designed to communicate with the control unit.

4. System according to claim 3, wherein the mechanical actuation means (9) can be triggered by the monitoring unit so that the blocking means (12) are opened.

5. System according to claim 4, wherein the monitoring unit triggers the mechanical actuation means (9) when said unit receives an enabling instruction by the control unit.

6. System according to at least one of claims 2 to 5, wherein the control unit comprises a central control unit of the channel storage system.

7. System according to at least one of claims 2 to 5, wherein the control unit is a control unit of a load receiving means, in particular a storage and retrieval machine.

8. System according to at least one of claims 1 to 5, wherein the mechanical actuation means (9) comprise a rod or a tappet.

9. System according to at least one of claims 6 to 8, wherein the blocking means (12) comprise gravitational barriers having switch lugs (5) which can be actuated by the rod or tappet (9), in particular by the tip (9s) of the tappet.

10. System according to claim 9, wherein the shuttle (3) has a lower face (3u), wherein the lower face (3u) of the shuttle (3) comprises a substantially continuous surface, and the lower face (3u) of the shuttle is capable of keeping the gravitational barriers (12) open when the lower face (3u) is located above the gravitational barrier (12).

11. Method for operating a shuttle (3) in a channel storage system in a fail-safe manner, said storage system comprising one or more channels (11), closed blocking means (12) at the end of the channel, which means can be opened mechanically and, when in the closed position, prevent the shuttle (3) from travelling out of the channel (11), and a control unit for communicating with the shuttle (3), the shuttle (3) comprising mechanical actuation means (9) and a monitoring unit, said method comprising the following steps:
driving the shuttle (3) in the channel (11) and at the same time detecting the current position of the shuttle (3) by means of the monitoring unit;
stopping the shuttle (3) on the mechanical locking means (12) in a predefined position relative to the end of the channel;
providing a load receiving means ahead of the end of the channel;
opening the blocking means (12) by way of the mechanical actuation means (9) of the shuttle when an enabling instruction by the control unit is received;
moving the shuttle (3) past the opened blocking means (12) when the load receiving means has reached a predetermined receiving position;
receiving the shuttle (3) by means of the load receiving means.

## Revendications

1. Système de stockage par rayonnages à canaux-navette ou en files avec un ou plusieurs canaux (11), comprenant
au moins une navette (3) ou shuttle pour le transport de palettes ;
des moyens de verrouillage (12) fermés à l'extrémité de canal, qui peuvent être ouverts mécaniquement, et qui, dans l'état fermé, empêchent la navette (3) de sortir du canal (11) ;
**caractérisé en ce que**
la navette (3) comporte des moyens d'actionnement mécaniques (9) pour ouvrir les moyens de verrouillage (12).

2. Système selon la revendication 1, comprenant, par ailleurs, une unité de commande, qui est conçue pour communiquer avec la navette (3).

3. Système selon la revendication 2, dans lequel la navette (3) comprend une unité de contrôle, qui est conçue pour détecter la position de la navette (3) dans le canal (11), notamment par rapport à l'extrémité de canal, et qui est conçue pour communiquer avec l'unité de commande.

4. Système selon la revendication 3, dans lequel les moyens d'actionnement mécaniques (9) peuvent être déclenchés par l'unité de contrôle, de sorte que les moyens de verrouillage (12) s'ouvrent.

5. Système selon la revendication 4, dans lequel l'unité de contrôle déclenche les moyens d'actionnement mécaniques (9) lorsqu'elle reçoit une validation par l'unité de commande.

6. Système selon l'une au moins des revendications 2 - 5, dans lequel l'unité de commande comprend une unité de commande centrale du système de stockage par rayonnages à canaux-navette.

7. Système selon l'une au moins des revendications 2 - 5, dans lequel l'unité de commande est une unité de commande d'un moyen de réception ou de prélèvement de charge, notamment d'un appareil de desserte de rayonnages dit transstockeur.

8. système selon l'une au moins des revendications 1 - 5, dans lequel les moyens d'actionnement mécaniques (9) comportent un barreau ou un poussoir.

9. Système selon l'une au moins des revendications 6 - 8, dans lequel les moyens de verrouillage (12) comportent des verrous à gravité avec des talons de commande (5), qui peuvent être actionnés par le barreau ou le poussoir (9), notamment par la pointe (9s) du poussoir.

10. Système selon la revendication 9, dans lequel la navette (3) possède un côté inférieur (3u), dans lequel le côté inférieur (3u) de la navette (3) présente une surface sensiblement continue, et le côté inférieur (3u) de la navette peut maintenir ouverts les verrous à gravité (12) lorsque le côté inférieur (3u) se trouve au-dessus du verrou à gravité (12).

11. Procédé pour faire fonctionner, sans risque de chute, une navette (3) dans un système de stockage par rayonnages à canaux-navette avec un ou plusieurs canaux (11), comportant des moyens de verrouillage (12) fermés à l'extrémité de canal, qui peuvent être ouverts mécaniquement, et qui, dans l'état fermé, empêchent la navette (3) de sortir du canal (11), le système comprenant également une unité de commande pour communiquer avec la navette (3), la navette (3) comprenant des moyens d'actionnement (9) et comprenant une unité de contrôle, le procédé présentant les étapes suivantes :
circulation de la navette (3) dans le canal (11) tout en relevant la position instantanée actuelle de la navette (3) par l'unité de contrôle ;
arrêt de la navette (3) dans une position prédéfinie par rapport a l'extrémité de canal au niveau des moyens de verrouillage mécaniques (12) ;
mise à disposition d'un moyen de prélèvement de charge devant l'extrémité de canal ;
ouverture des moyens de verrouillage (12) par les moyens d'actionnement mécaniques (9) de la navette (3) lors de la réception d'une validation par l'unité de commande ;
passage de la navette (3) par-dessus les moyens de verrouillage (12) ouverts, lorsque le moyen de prélèvement ou de réception de charge a atteint une position de réception prédéfinie ;
réception ou prélèvement de la navette (3) par le moyen de prélèvement ou de réception de charge.
